# EUROPEAN PATENT APPLICATION

(11) **EP 4 546 131 A1**
(43) Date of publication of application: **30.04.2025**
(21) Application number: 23827378.3
(22) Date of filing: 17.05.2023
(51) Int. Cl.: G06F 9/455, G21D 3/00, H04L 45/76, H04L 49/60, H04L 45/74, H04L 41/122, H04L 12/46

(54) **NUCLEAR POWER PLANT VIRTUALIZATION SYSTEM AND OPERATING METHOD THEREFOR**

(30) Priority: 22.06.2022 KR 20220076186
(71) Applicant: Korea Hydro & Nuclear Power Co., Ltd, Gyeongju-si, Gyeongsangbuk-do 38120 (KR)
(72) Inventor: KIM, Min Seok, Daejeon 34101 (KR); LEE, Sung Jin, Daejeon 34101 (KR); RYU, Ho Sun, Daejeon 34101 (KR); KIM, Yong Sik, Daejeon 34101 (KR)
(74) Representative: Taruttis, Tilman
(86) International application number: PCT/KR2023/006663
(87) International publication number: WO 2023/249258

(57) **Abstract**

A nuclear power plant virtualization system and an operation method thereof are provided. A nuclear power plant virtualization system includes: virtual machine control parts; virtual machine network parts linked to the virtual machine control parts; and a virtualization platform switch linked with the virtual machine control parts and the virtual machine network parts, wherein the virtual machine control parts include a first MMI linked driver module, the virtual machine network parts include a second MMI linked driver module, and the virtual machine control parts and the virtual machine network parts modify an IP/MAC address in data communicated with the outside and allow the data communicated with the outside from the virtual machine control parts to pass through the virtual machine network parts, via the first MMI linked driver module and the second MMI linked driver module.

## Description

### [Technical Field]

The present disclosure relates to a nuclear power plant virtualization system and an operation method thereof.

### [Background Art]

A nuclear power plant virtualization system includes a virtualization platform for virtualizing and operating a power plant Man Machine Interface System (MMIS), a master node for linking actual data (PI) of the power plant and a simulator and actual MMIS, a simulator for linking power plant status and operation-related information, a physical MMIS for operating the software and hardware of the MMIS system, etc.

The virtualization platform is equipped with virtualization MMIS, and in the virtualization MMIS, controllers and servers such as safety and non-safety systems and information processing systems of the power plant MMIS are implemented in the form of a virtual machine (VM).

A network of power plant non-safety systems has a hierarchical topology. In general, the network has a two-tier structure, but also has a three-tier structure depending on the complexity of the system. In order to virtualize the network with such a structure in the same way as in reality, a virtual switch supported by the virtualization platform must support the hierarchical topology, but there is currently no virtualization platform that supports such a structure. Furthermore, in order to implement the hierarchical network, such as the non-safety network of the power plant MMIS in the same way as in reality, there is a problem in that virtual machines must communicate via a physical switch by externally implementing a physical network switch in the same way as in reality.

### [Disclosure]

### [Technical Problem]

Aspects of the present disclosure are to solve a problem in that virtual machines need to communicate through a physical switch by externally implementing a physical network switch in the same way as in reality in order to implement a hierarchical network, such as a non-safety network of a nuclear power plant MMIS in the same way as in reality.

Aspects of the present disclosure are also to enable a configuration of flexible topologies such as hierarchical, mesh, and bus types, without modifying software of a virtual switch provided by default in a virtualization platform or passing through an external physical switch in virtualizing a nuclear power plant.

Aspects of the present disclosure are also to enable software of a power plant controller mounted on a virtual machine to be used without modification, and to enable a virtualization MMIS to configure and communicate with the same topology as the physical power plant.

Aspects of the present disclosure are not limited to the aspects mentioned above, and other aspects not mentioned will be clearly understood by those skilled in the art from the following description.

### [Technical Solution]

According to an aspect of the present disclosure, there is provided an operation method of a nuclear power plant virtualization system, the operation method includes preparing a nuclear power plant virtualization system for operation; and operating the nuclear power plant virtualization system, wherein the nuclear power plant virtualization system includes: virtual machine control parts for virtualization of a nuclear power plant, virtual machine network parts for network operation of virtualization of the nuclear power plant, and a virtualization platform switch linked with the virtual machine control parts and the virtual machine network parts.

The virtual machine control parts may include a first MMI linked driver module, the virtual machine network parts may include a second MMI linked driver module, and the virtual machine control parts and the virtual machine network parts may modify an IP/MAC address in data communicated with the outside and allow the data communicated with the outside from the virtual machine control parts to pass through the virtual machine network parts, via the first MMI linked driver module and the second MMI linked driver module.

The virtual machine network parts may further include an MMI virtualization network module that implements a network switch function of a nuclear power plant MMI in the form of software and for configuring a switch internally implemented as software to correspond to an MMI topology.

The virtual machine network parts may further include a network configuration table in which information about a network switch and topology configuration, ports of the network switch, VLAN, and IP/MAC of the virtual machine control parts is stored.

The virtualization network module may receive packet information from the second MMI linked driver module and switch the packet information based on the information stored in the network configuration table.

The virtualization network module may perform a first switching that transmits packets and performs switching and a second switching based on obtaining only final switching result information by logically calculating only address information and port information based on the network configuration table, set a networking delay time to compensate for a network delay caused by the first switching and the second switching, and implement a preset actual networking performance.

The networking delay time may be set to be the same overall or set individually for each device included in the network module.

The network configuration table may include information about port information, IP information, and MAC information of a switch, the virtualization network module may mirror packet data passing through the virtualization network module based on the network configuration table and allocate mirroring dedicated virtual NIC for the mirroring, and the information for the mirroring may be changed based on input information, and be changed at any time even during network operation, so that the mirroring information may be modified.

The virtual machine control parts and the virtual machine network parts may perform address change processing of IP/MAC in a communication driver via the first MMI linked driver module and the second MMI linked driver module.

The virtual machine network parts may generate first backup information by backing up first information about an address of a destination IP/MAC to a first data area of a packet to be transmitted based on the first MMI linked driver module for address change processing of IP/MAC in a communication driver, and provide first packet transmission data in which the existing first information is changed to second information about the IP/MAC of the virtual machine network parts.

The virtual machine network parts may receive the first packet transmission data for the address change processing and provide second packet transmission data in which the second information in the first packet transmission data is changed to third information corresponding to the first backup information,

The virtual machine network parts may generate second backup information by backing up fourth information about an address of a source IP/MAC to a data area of a packet based on the second MMI linked driver module for the address change processing of IP/MAC in the communication driver, and provide third packet transmission data in which the existing fourth information is changed to fifth information about the IP/MAC of the virtual machine network parts.

The virtual machine control parts may receive the third packet transmission data for the address change processing and provide fourth packet transmission data in which the fifth information is changed to sixth information corresponding to the second backup information.

The virtual machine network parts may implement the MMI network switch function of the nuclear power plant based on an SDN or API method.

The virtual machine network parts may generate first backup information by backing up first information about an address of a destination IP/MAC to a first data area of a packet to be transmitted based on the first MMI linked driver module for address change processing of IP/MAC in a communication driver, and provide first packet transmission data in which the existing first information is changed to second information about the IP/MAC of the virtual machine network parts, the virtual machine network parts may receive the first packet transmission data for the address change processing and provide second packet transmission data in which the second information in the first packet transmission data is changed to third information corresponding to the first backup information, the virtual machine network parts may generate second backup information by backing up fourth information about an address of a source IP/MAC to a data area of a packet based on the second MMI linked driver module for the address change processing, and provide third packet transmission data in which the existing fourth information is changed to fifth information about the IP/MAC of the virtual machine network parts, and the virtual machine control parts may receive the third packet transmission data for the address change processing and provide fourth packet transmission data in which the fifth information is changed to sixth information corresponding to the second backup information.

According to another aspect of the present disclosure, there is provided a nuclear power plant virtualization system including: virtual machine control parts; virtual machine network parts linked to the virtual machine control parts; and a virtualization platform switch linked with the virtual machine control parts and the virtual machine network parts, wherein the virtual machine control parts include a first MMI linked driver module, the virtual machine network parts include a second MMI linked driver module, and the virtual machine control parts and the virtual machine network parts modify an IP/MAC address in data communicated with the outside and allow the data communicated with the outside from the virtual machine control parts to pass through the virtual machine network parts, via the first MMI linked driver module and the second MMI linked driver module.

### [Advantageous Effects]

According to the nuclear power plant virtualization system of the present disclosure as described above, there are one or more of the following effects.

The present disclosure may solve the problem in that the virtual machines need to communicate through the physical switch by externally implementing the physical network switch in the same way as in reality in order to implement the hierarchical network, such as the non-safety network of the nuclear power plant MMIS, in the same way as in reality.

Further, the present disclosure may enable the configuration of flexible topologies such as hierarchical, mesh, and bus types, without modifying software of the virtual switch provided by default in the virtualization platform or passing through the external physical switch in virtualizing the nuclear power plant.

Further, the present disclosure may enable the software of the power plant controller mounted on the virtual machine to be used without modification, and to enable the virtualization MMIS to configure and communicate with the same topology as the physical power plant.

### [Description of Drawings]

FIG. 1 is a block diagram illustrating a configuration of a nuclear power plant virtualization system according to an embodiment of the present disclosure;
FIG. 2 is a configuration diagram illustrating the configuration according to FIG. 1;
FIGS. 3 and 4 are diagrams for describing operations of the configuration according to FIG. 1;
FIG. 5 is a reference diagram for comparison with the configuration according to FIG. 1; and
FIG. 6 is a flowchart sequentially illustrating an operation method of a nuclear power plant virtualization system according to an embodiment of the present disclosure.

### [Mode for Invention]

Hereinafter, embodiments of the present disclosure will be described in detail with reference to the accompanying drawings. Hereinafter, preferred embodiments of the present disclosure will be described in detail with reference to the attached drawings. Advantages and features of the present disclosure, and a method for achieving the advantages and features will become apparent with reference to the embodiments described below in detail in conjunction with the accompanying drawings. However, the present disclosure is not limited to the embodiments disclosed below, but may be implemented in a variety of different forms, these embodiments will be provided only in order to make the present disclosure complete and allow those skilled in the art to completely recognize the scope of the present disclosure, and the present disclosure is only defined by the scope of the claims. The same reference numbers indicate the same components throughout the specification.

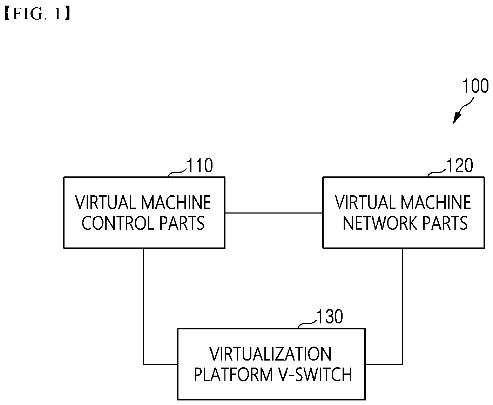

Referring to FIG. 1, a nuclear power plant virtualization system according to an embodiment of the present disclosure includes virtual machine control parts 110, virtual machine network parts 120, and a virtualization platform V-switch 130.

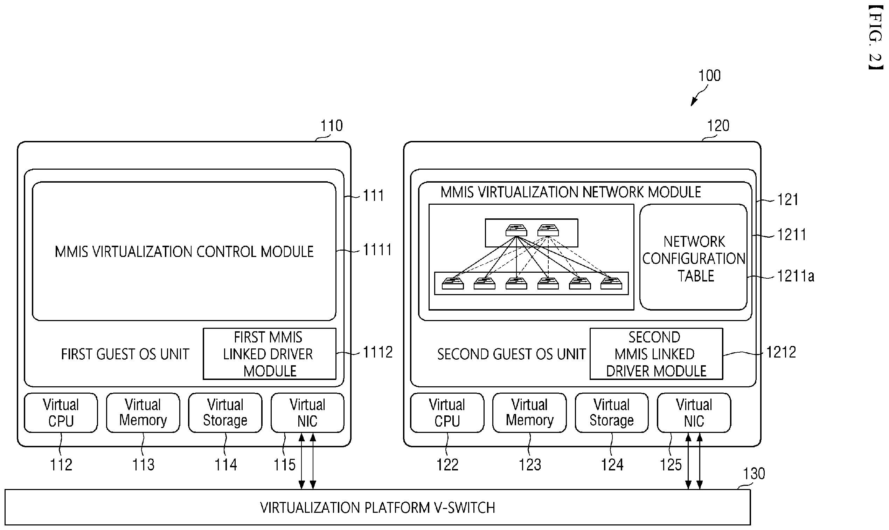

Referring to FIG. 2, the virtual machine control parts 110 include a first guest OS unit 111, a first virtual CPU unit 112, a first virtual memory unit 113, a first virtual storage unit 114, and a first virtual NIC unit 115.

The first guest OS unit 111 includes an MMIS virtualization control module 1111 and a first MMI linked driver module 1112. The virtual machine network parts 120 include a second guest OS unit 121 and a second virtual CPU unit 122.

Furthermore, the virtual machine network parts 120 include a virtual memory unit 123, a second virtual storage unit 124, and a second virtual NIC unit 125. The second guest OS unit 121 includes an MMIS virtualization network module 1211 and a first MMI linked driver module 1112.

The MMIS virtualization network module 1211 includes a network configuration table 1211a. The virtual machine control parts 110 of the nuclear power plant virtualization system 100 perform overall or partial control related to virtualization.

Here, the virtual machine network parts 120 are linked with the virtual machine control parts 110 to perform networking for virtualization, etc. The virtualization platform switch 130 is linked with the virtual machine control parts 110 and the virtual machine network parts 120, respectively.

For example, the virtualization platform switch 130 operates via the first MMI linked driver module 1112 and the second MMI linked driver module 1212. The virtual machine control parts 110 and the virtual machine network parts 120 modify IP/MAC addresses in data communicated with the outside.

The data communicated with the outside from the virtual machine control parts 110 is allowed to pass through the virtual machine network parts 120. The second MMI virtualization network module 1211 of the virtual machine network parts 120 implements a network switch function of a nuclear power plant MMI in the form of software.

Furthermore, the second MMI virtualization network module 1211 is for configuring a switch internally implemented as software to correspond to the MMI topology. The virtualization network module 1211 performs first switching and second switching.

The first switching includes transmitting packets and performing switching. The second switching includes performing switching based on obtaining only final switching result information by logically calculating only address information and port information based on the network configuration table 1211a.

Meanwhile, the configuration table 1211a of the virtual machine network parts 120 stores information about the network switch and topology configuration, ports of the network switch, VLAN, and IP/MAC of the virtual machine control parts 110.

The virtualization network module 1211 receives packet information from the second MMI linked driver module 1212. Furthermore, the virtualization network module 1211 switches the packet information based on the information stored in the network configuration table 1211a.

The virtualization network module 1211 may set a networking delay time to compensate for a network delay caused by the first switching and the second switching. Through this, the virtualization network module 1211 allows a preset actual networking performance to be implemented.

The networking delay time may be set to be the same overall or set individually for each device included in the network module. The network configuration table 1211a includes information about port information, IP information, and MAC information of a switch.

Furthermore, the virtualization network module 1211 is capable of mirroring the packet data passing through the virtualization network module 1211 based on the network configuration table 1211a. The virtualization network module 1211 may allocate a mirroring dedicated virtual NIC for the mirroring.

The information for the mirroring may be changed based on input information, but may be changed at any time even during network operation, so that the mirroring information may be modified.

The virtual machine control parts 110 and the virtual machine network parts 120 perform address change processing of IP/MAC in a communication driver via the first MMI linked driver module 1112 and the second MMI linked driver module 1212.

The virtual machine control parts 110 generate first backup information B1 by backing up first information D1 about an address of a destination IP/MAC to a first data area L1 of a packet to be transmitted based on the first MMI linked driver module 1112 for the address change processing of IP/MAC in the communication driver.

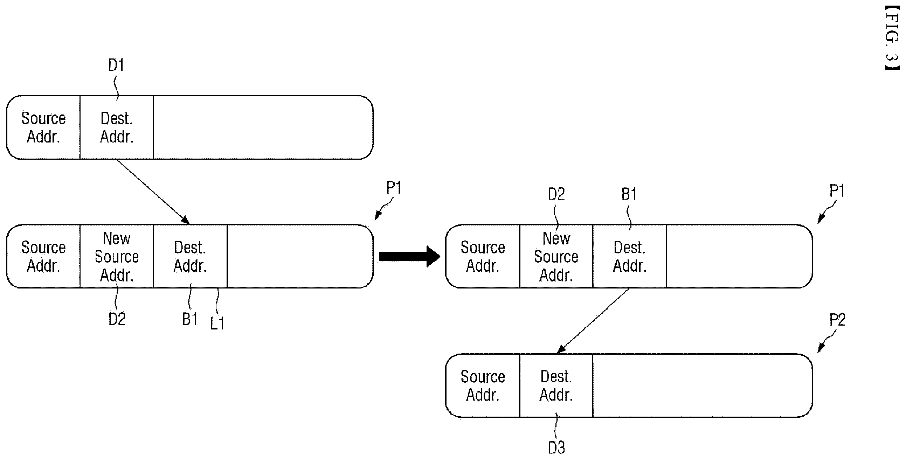

Here, the virtual machine control parts 110 provide first packet transmission data P1 in which the existing first information D1 is changed to second information D2 about the IP/MAC of the virtual machine network parts 120 (see FIG. 3).

The virtual machine network parts 120 receive the first packet transmission data P1 for the address change processing. The virtual machine network parts 120 provide second packet transmission data P3 in which the second information D2 in the first packet transmission data P1 is changed to third information D3 corresponding to the first backup information B1 (see FIG. 3).

Meanwhile, the virtual machine network parts 120 generate second backup information B2 by backing up fourth information D4 about an address of a source IP/MAC to a data area of a packet based on the second MMI linked driver module 1212 for the address change processing of IP/MAC in the communication driver (see FIG. 3).

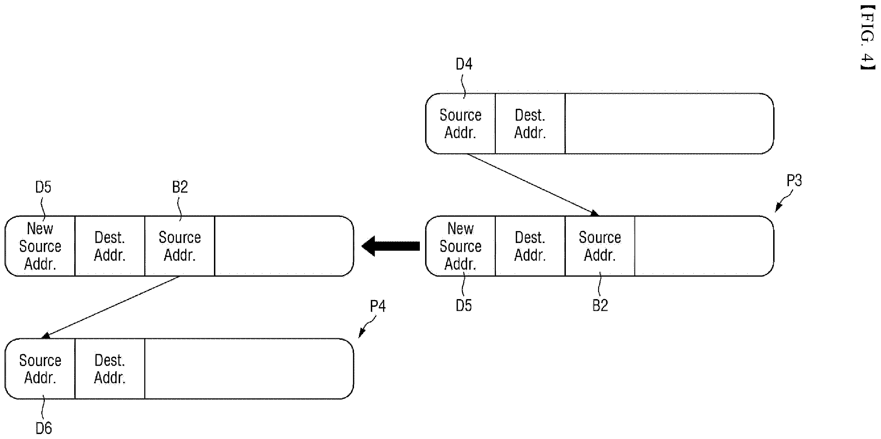

The virtual machine network parts 120 provide third packet transmission data P3 in which the existing fourth information D4 is changed to fifth information D5 about the IP/MAC of the virtual machine network parts 120 (see FIG. 4).

Furthermore, the virtual machine control parts 110 receive the third packet transmission data P3 for the address change processing. The virtual machine control parts 110 provide fourth packet transmission data P4 in which the fifth information D5 is changed to sixth information D6 corresponding to the second backup information B2.

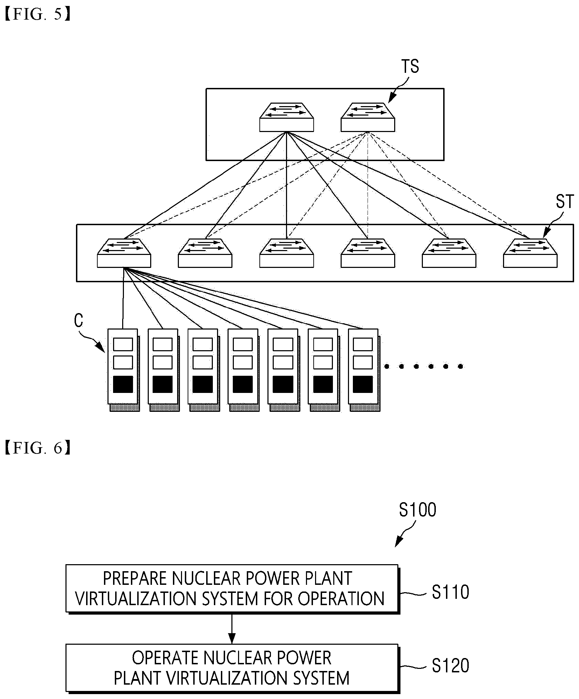

Referring to FIG. 6, in an operation method of a nuclear power plant virtualization system according to an embodiment of the present disclosure, a nuclear power plant virtualization system 100 is prepared. Furthermore, the nuclear power plant virtualization system 100 is operated. Here, the nuclear power plant virtualization system 100 includes virtual machine control parts 110, virtual machine network parts 120, and a virtualization platform switch 130.

The virtual machine control parts 110 and the virtual machine network parts 120 are operated in conjunction with each other via the first MMI linked driver module 1112 and the second MMI linked driver module 1212.

For example, by modifying the IP/MAC address in the data communicated with the outside, the data communicated with the outside from the virtual machine control parts 110 passes through the virtual machine network parts 120.

The second MMI virtualization network module 1211 of the virtual machine network parts 120 implements a network switch function of a nuclear power plant MMI in the form of software.

Referring to FIG. 5, before application of the present disclosure, in order to implement a hierarchical network such as a non-safety network of the power plant MMIS in the same way as in reality, a physical network switch needs to be externally implemented in the same way as in reality.

After such a physical network switch is externally implemented in the same way as in reality, virtual machines need to communicate via a physical switch. However, such a problem may be solved by the present disclosure described above.

Furthermore, the switch internally implemented in software is configured to correspond to the MMI topology. Meanwhile, the virtual machine network parts 120 implement the MMI network switch function of the nuclear power plant based on an SDN or API method.

Although the embodiments of the present disclosure have been described with reference to the accompanying drawings, those of ordinary skill in the art to which the present disclosure pertains will understand that the present disclosure may be embodied in other specific forms without changing the technical spirit or essential features thereof. Therefore, it should be understood that the exemplary embodiments described above are illustrative in all aspects and not restrictive.

## Claims

1. An operation method of a nuclear power plant virtualization system, the operation method comprising:
preparing a nuclear power plant virtualization system for operation; and
operating the nuclear power plant virtualization system,
wherein the nuclear power plant virtualization system includes:
virtual machine control parts for virtualization of a nuclear power plant,
virtual machine network parts for network operation of virtualization of the nuclear power plant, and
a virtualization platform switch linked with the virtual machine control parts and the virtual machine network parts.

2. The operation method of claim 1, wherein the virtual machine control parts include a first MMI linked driver module,
the virtual machine network parts include a second MMI linked driver module, and
the virtual machine control parts and the virtual machine network parts modify an IP/MAC address in data communicated with the outside and allow the data communicated with the outside from the virtual machine control parts to pass through the virtual machine network parts, via the first MMI linked driver module and the second MMI linked driver module.

3. The operation method of claim 2, wherein the virtual machine network parts further include an MMI virtualization network module that implements a network switch function of a nuclear power plant MMI in the form of software and for configuring a switch internally implemented as software to correspond to an MMI topology.

4. The operation method of claim 3, wherein the virtual machine network parts further include a network configuration table in which information about a network switch and topology configuration, ports of the network switch, VLAN, and IP/MAC of the virtual machine control parts is stored, and
the virtualization network module is configured to receive packet information from the second MMI linked driver module and switch the packet information based on the information stored in the network configuration table.

5. The operation method of claim 4, wherein the virtualization network module is configured to:
perform a first switching that transmits packets and performs switching, and a second switching based on obtaining only final switching result information by logically calculating only address information and port information based on the network configuration table,
set a networking delay time to compensate for a network delay caused by the first switching and the second switching, and
implement a preset actual networking performance.

6. The operation method of claim 5, wherein the virtual machine network parts are configured to:
generate first backup information by backing up first information about an address of a destination IP/MAC to a first data area of a packet to be transmitted based on the first MMI linked driver module for address change processing of IP/MAC in a communication driver, and
provide first packet transmission data in which the existing first information is changed to second information about the IP/MAC of the virtual machine network parts.

7. The operation method of claim 6, wherein the virtual machine network parts are configured to receive the first packet transmission data for the address change processing and provide second packet transmission data in which the second information in the first packet transmission data is changed to third information corresponding to the first backup information.

8. The operation method of claim 6, wherein the virtual machine network parts are configured to:
generate second backup information by backing up fourth information about an address of a source IP/MAC to a data area of a packet based on the second MMI linked driver module for the address change processing of IP/MAC in the communication driver, and
provide third packet transmission data in which the existing fourth information is changed to fifth information about the IP/MAC of the virtual machine network parts.

9. The operation method of claim 8, wherein the virtual machine control parts are configured to receive the third packet transmission data for the address change processing and provide fourth packet transmission data in which the fifth information is changed to sixth information corresponding to the second backup information.

10. The operation method of claim 5, wherein the virtual machine network parts implement the MMI network switch function of the nuclear power plant based on an SDN or API method.

11. The operation method of claim 5, wherein the virtual machine network parts are configured to:
generate first backup information by backing up first information about an address of a destination IP/MAC to a first data area of a packet to be transmitted based on the first MMI linked driver module for address change processing of IP/MAC in a communication driver, and
provide first packet transmission data in which the existing first information is changed to second information about the IP/MAC of the virtual machine network parts,
the virtual machine network parts are configured to receive the first packet transmission data for the address change processing and provide second packet transmission data in which the second information in the first packet transmission data is changed to third information corresponding to the first backup information,
the virtual machine network parts are configured to:
generate second backup information by backing up fourth information about an address of a source IP/MAC to a data area of a packet based on the second MMI linked driver module for the address change processing, and
provide third packet transmission data in which the existing fourth information is changed to fifth information about the IP/MAC of the virtual machine network parts, and
the virtual machine control parts are configured to receive the third packet transmission data for the address change processing and provide fourth packet transmission data in which the fifth information is changed to sixth information corresponding to the second backup information.

12. The operation method of claim 3, wherein the network configuration table includes information about port information, **IP** information, and MAC information of a switch,
the virtualization network module is configured to mirror packet data passing through the virtualization network module based on the network configuration table and allocate mirroring dedicated virtual NIC for the mirroring, and
the information for the mirroring is changed based on input information, and is changed at any time even during network operation, so that the mirroring information is modified.

13. The operation method of claim 2, wherein the virtual machine control parts and the virtual machine network parts perform address change processing of IP/MAC in a communication driver via the first MMI linked driver module and the second MMI linked driver module.

14. A nuclear power plant virtualization system comprising:
virtual machine control parts;
virtual machine network parts linked to the virtual machine control parts; and
a virtualization platform switch linked with the virtual machine control parts and the virtual machine network parts,
wherein the virtual machine control parts include a first MMI linked driver module,
the virtual machine network parts include a second MMI linked driver module, and
the virtual machine control parts and the virtual machine network parts modify an IP/MAC address in data communicated with the outside and allow the data communicated with the outside from the virtual machine control parts to pass through the virtual machine network parts, via the first MMI linked driver module and the second MMI linked driver module.
